# DEMANDE DE BREVET EUROPEEN

(11) **EP 0 839 780 A1**
(43) Date de publication de la demande: **06.05.1998**
(21) Numéro de dépôt: 96870138.3
(22) Date de dépôt: 31.10.1996
(51) Int. Cl.: C05F 3/00, C05D 3/02

(54) **Procédé de traitement de déjections avicoles et engrais obtenu selon ce procédé**

(71) Demandeur: Laviedor, 9870 Olsene-Zulte (BE); LHOIST RECHERCHE ET DEVELOPPEMENT, 1342 Limelette (BE)
(72) Inventeur: Delhaye, Jean-Paul, 1080 Molenbeek-Saint-Jean (BE); Vandewiele, Dion, 9870 Olsene-Zulte (BE); Bulteel, Michel, 1410 Waterloo (BE); Kouar, Chakib, 1030 Bruxelles (BE)
(74) Mandataire: Pieraerts, Jacques

(57) **Abrégé**

L'invention concerne un procédé de traitement de déjections avicoles en vue d'obtenir un produit stabilisé, homogène, assaini, désodorisé, libéré de son ammoniac, à haute valeur fertilisante et valorisable en agriculture, caractérisé en ce qu'il consiste à mélanger à celles-ci dans une enceinte fermée au moins un composé choisi dans le groupe comprenant la chaux vive (CaO), la chaux vive magnésienne (CaOMgO) et leurs mélanges en proportions variables, le composé se présentant sous forme pulvérulente dont la granulométrie des particules est inférieure à 2 mm avec une tolérance de 5 %.

## Description

L'invention concerne un procédé de traitement de déjections avicoles en vue d'obtenir un produit stabilisé, homogène, assaini, désodorisé, libéré de son ammoniac, à haute valeur fertilisante et valorisable en agriculture.

Les déjections avicoles auxquelles s'applique le procédé sont essentiellement constituées par les fientes de poules pondeuses ou de poulets de chair. Ces fientes sont produites en très grandes quantités et leur utilisation rationnelle en agriculture ne peut être envisagée que moyennant un traitement selon des procédés fiables et économiquement faisables.

Le but de l'invention est de réaliser un procédé qui permet de traiter les déjections avicoles, lesquelles peuvent posséder une teneur variable en matière sèche, pour se présenter sous une forme compatible avec les bonnes pratiques agricoles.

Un autre but de l'invention est de réaliser un engrais organo-minéral dont la composition permet de répondre également de manière adéquate aux divers besoins spécifiques à chaque spéculation agricole.

Pour réaliser cet objectif conformément à l'invention, le procédé selon l'invention consiste à mélanger à celles-ci dans une enceinte fermée au moins un composé choisi dans le groupe comprenant la chaux vive (CaO), la chaux vive magnésienne (CaOMgO) et leurs mélanges en proportions variables, le composé se présentant sous forme pulvérulente dont la granulométrie des particules est inférieure à 2 mm avec une tolérance de 5 %.

Toujours selon l'invention on utilise de 5 à 25 % en poids de composé calculé sur base du poids total des déjections avicoles mises en jeu. D'excellents résultats sont obtenus en incorporant moins de 10 % en poids du composé.

Dans une forme de réalisation rendue possible par le procédé on additionne au mélange composé/déjections avicoles des quantités variables de fertilisants minéraux azotés, phosphoriques, potassiques ou oligo-éléments.

D'autres détails et avantages de l'invention ressortiront de la description qui sera faite ci-après d'un procédé de traitement de déjections avicoles selon l'invention et de l'engrais organo-minéral obtenu selon ce procédé. Cette description n'est donnée qu'à titre d'exemple et ne limite pas l'invention.

Le procédé selon l'invention consiste à traiter les déjections avicoles en vue d'optimaliser leur valorisation en agriculture.

Deux types de fientes de poules pondeuses sont actuellement obtenus en aviculture. Les fientes humides sont évacuées journellement des unités de ponte et stockées en fosses. Les fientes sèches sont obtenues par ventilation des déjections tombant sur un tapis roulant et séchant dans le poulailler grâce à un courant d'air continu. Ces deux types de déjections ne sont pas stabilisés et dans le cas des fientes sèches une éventuelle réhydratation lors des manipulations pourrait faire démarrer des fermentations incontrôlées et générant des odeurs.

Les très grandes quantités de déjections avicoles présentent des nuisances olfactives, des risques de contamination bactériologique et des contraintes d'épandabilité que tend à supprimer le procédé selon l'invention.

Le procédé qui est décrit ci-après permet de traiter les fientes humides et les fientes sèches de poules pondeuses, de même que celles qui sont obtenues dans les élevages de poulets de chair quelque soit le type de litière utilisé. Le traitement consiste à mélanger celles-ci à de la chaux vive (CaO) ou de la chaux vive magnésienne (CaOMgO) ou à un mélange de celles-ci en proportions variables. Ce traitement peut s'effectuer "in situ" ou en site propre. Ce dernier permet de regrouper les fientes de divers poulaillers.

Il est important d'utiliser pour le traitement de la chaux ou de la chaux magnésienne ou un mélange de celles-ci sous forme pulvérulente dont 95 % des particules ont un diamètre inférieur à 2 mm.

Une des réactions engendrées par ce mélange est un dégagement important d'ammoniac suite à la forte élévation du pH inhérent au traitement.

L'ammoniac est évacué de l'enceinte fermée à l'intérieur de laquelle est réalisé le mélange et piégé. Il peut alors être valorisé par les techniques conventionnelles ce qui permet d'éviter toute forme de pollution atmosphérique.

Il est aisé de mélanger de façon homogène un composé tel que défini ci-dessus aux déjections avicoles.

Le produit fertilisant obtenu possède, en outre, une action qui permet l'amendement des sols et se présente sous une forme stabilisée qui facilite son utilisation en agriculture ou horticulture aussi bien durant le transport et le stockage que lors de son épandage et son incorporation dans le sol.

En tant que produit fini, c.à.d. en tant que fertilisant l'engrais organo-minéral obtenu conformément au procédé selon l'invention présente de nombreux avantages dont les principaux peuvent se résumer de la manière suivante:
a) le produit est assaini bactériologiquement ce qui limite les risques de contamination lors des manipulations et évite d'introduire des germes pathogènes dans les sols agricoles, germes dont il est souvent difficile d'augurer du devenir;
b) le produit ne présente aucune nuisance olfactive tant sur le site de production et de stockage que lors de son épandage;
c) le produit présente une plus value agronomique détaillée ci-dessous:
   - augmentation importante de la siccité du produit;
   - conservation de sa valeur fertilisante initiale en P et K.
   - possibilité d'utilisation comme engrais ou amendement calcaire ou calcaro magnésien corrigeant les pH acides des sols et cela en raison de l'addition de CaO et/ou de CaOMgO;
   - possibilité de pallier aux déficiences en magnésium du sol grâce à l'utilisation de chaux vive magnésienne;
   - équilibrage possible en nutriments par addition d'un complément minéral;
   - possibilité d'apporter en un seul épandage, les éléments fertilisants N.P.K., l'amendement pour la correction du pH du sol et éventuellement une fertilisation magnésienne de complément.

## Revendications

1. Procédé de traitement de déjections avicoles en vue d'obtenir un produit stabilisé, homogène, assaini, désodorisé, libéré de son ammoniac, à haute valeur fertilisante et valorisable en agriculture, caractérisé en ce qu'il consiste à mélanger à celles-ci dans une enceinte fermée au moins un composé choisi dans le groupe comprenant la chaux vive (CaO), la chaux vive magnésienne (CaOMgO) et leurs mélanges en proportions variables, le composé se présentant sous forme pulvérulente dont la granulométrie des particules est inférieure à 2 mm avec une tolérance de 5 %.

2. Procédé de traitement selon la revendication 1, caractérisé en ce qu'on utilise de 5 à 25 % en poids de composé calculé sur base du poids total des déjections avicoles mise en jeu.

3. Procédé de traitement selon l'une des revendications 1 et 2, caractérisé en ce qu'on piège l'ammoniac gazeux qui s'est dégagé lors de la réaction à l'intérieur de l'enceinte fermée précitée et en ce qu'on piège l'ammoniac gazeux sous forme ionique.

4. Procédé de traitement selon l'une des revendications 1 - 3, caractérisé en ce qu'on additionne au mélange composé/déjections avicoles des quantités variables de fertilisants minéraux azotés, phosphoriques, potassiques ou oligo éléments.

5. Procédé de traitement selon l'une des revendications 1 - 4, caractérisé en ce qu'on utilise des déjections avicoles ayant une teneur en matière sèche variable.

6. Procédé selon l'une des revendications 1 - 5, caractérisé en ce qu'on incorpore aux déjections avicoles des déchets d'origine végétale et/ou animale.

7. Engrais organo-minéral obtenu selon l'une des revendications précédentes, caractérisé en ce qu'il consiste en un mélange de déjections avicoles avec 5 à 25° de chaux vive, de chaux vive magnésienne ou d'un mélange de celles-ci par rapport au poids de déjections avicoles mises en jeu.

8. Engrais organo-minéral selon la revendication 7, caractérisé en ce qu'il comprend une addition de fertilisants minéraux azotés, phosphoriques, potassiques et/ou d'oligo-éléments.
